# EUROPEAN PATENT APPLICATION

(11) **EP 4 417 968 A1**
(43) Date of publication of application: **21.08.2024**
(21) Application number: 23305213.3
(22) Date of filing: 17.02.2023
(51) Int. Cl.: G01N 27/22

(54) **HUMIDITY SENSOR**

(71) Applicant: TE Connectivity Sensors France, 31027 Toulouse Cedex 3 (FR)
(72) Inventor: Gayrard, Fabian, Toulouse (FR); Fraisse, Quentin, Toulouse (FR)
(74) Representative: Grünecker Patent- und Rechtsanwälte PartG mbB

(57) **Abstract**

The invention relates to a humidity sensor (1, 100) comprising a sensing element (3, 103) and a switching means (M), the sensing element (3, 103) comprising a first electrode (5, 105), a second electrode (7, 107), and a moisture-sensitive element (9, 109). The switching means (M) is arranged to switch the first electrode (5, 105) between a first state of operation and a second state of operation, wherein in the first state of operation, the first electrode (5, 105) is configured to sense an electric property of the moisture-sensitive element (9, 109), and in the second state of operation, the first electrode (5, 105) is configured to heat the moisture-sensitive element (9, 109) by the flowing of an electrical current, in particular a direct current (DC), through the first electrode (5, 105).

## Description

The present invention relates to a humidity sensor comprising a sensing element with a first electrode, a second electrode and a moisture-sensitive element.

Humidity sensors are known in the art in which two electrodes are arranged to monitor variations in an electric property of a moisture-sensitive element operating as a dielectric. For example, it is known to measure the capacitance of a polymer layer arranged between the electrodes that is in gaseous exchange with an ambient environment, and use the capacitance measure to determine the relative humidity (RH) of the environment. One such capacitive sensor is described in EP 2 755 023 A1. Another such capacitive sensor is described in WO 2001/042776 A1.

According to a phenomenon known as creep, or positive RH offset or positive RH shift, some of the water molecules having diffused from the environment into the polymer layer create bonds and become trapped in the polymer structure. The effect is particularly prevalent after prolonged exposure in in high-temperature, high-humidity environments and risks a permanent distortion of the measurement. In particular, the creep effect may lead to wrongly inflated values, reducing humidity sensor performance and limiting recommended operating conditions.

Therefore, humidity sensors in the art include additional heating devices to heat the moisture-sensitive element, but their heating performance is limited by insulating barrier elements interposed between said devices and the moisture-sensitive element.

In view of the above, it is an object of the present invention to provide a humidity sensor with that is less sensitive to creep.

This object is achieved by a humidity sensor according to claim 1. The humidity sensor comprises a sensing element and a switching means, the sensing element comprising a first electrode, a second electrode, and a moisture-sensitive element. The switching means is arranged to switch the first electrode between a first state of operation and a second state of operation, wherein in the first state of operation, the first electrode is configured to sense an electric property, in particular a capacitance, of the moisture-sensitive element, and in the second state of operation, the first electrode is configured to heat the moisture-sensitive element by the flowing of an electrical current, in particular a direct current (DC), through the first electrode.

Because of the switching of the state of operation of the first electrode, the heat can be generated directly in the first electrode. As the heat is realized in the direct vicinity of the moisture-sensitive element, the moisture-sensitive element is heated more efficiently compared to the prior art heating solutions, in which the heating devices are arranged further away. Specifically, when the electric current flows through the first electrode in the second state of operation, heat is generated in accordance with Joule's first law and the moisture-sensitive element is thereby heated by heat conduction. As the temperature of the moisture-sensitive element rises, the water molecules trapped in the moisture-sensitive element can be liberated, and leave the moisture-sensitive element in accordance with the ambient conditions of the sensor environment operating normally. In this way, the negative impact of creep can be reduced.

At the same time, the heating can also remove volatile organic compounds (VOC) and contamination gases such as ammonia (NH₃), hydrogen chloride (HCl), nitrogen dioxide (NO₂), or sulfur dioxide (SO₂), which, when present in the moisture-sensitive element, corrode the electrodes and falsify the sensing. The second state of operation can thus serve to both decontaminate and de-condensate the moisture-sensitive layer.

As the electrode is closer to the moisture-sensitive element than known from other heating solutions, the sensor according to the invention allows the current density to remain comparatively low during a heating cycle, thus avoiding the risk of electron migration and electrode damage.

In one aspect of the humidity sensor, at least a portion of the moisture-sensitive element can be sandwiched between the first electrode and the second electrode. This configuration can provide higher sensitivity to electric property variations in the moisture-sensitive area. Thus, in the first state of operation, the sensing can be more accurate.

In one aspect of the humidity sensor, the first electrode can comprise two electrical contact points, the two electrical contact points being at same electric potential, e.g. short cut by the switching means, in the first state of operation and at different electric potential in the second state of operation. In this way, an electric current can flow through the first electrode from one electrical contact point to the other electrical contact point, when the switching means is in the second state of operation. Meanwhile no current flows through the electrode from one electrical contact point to the other electrical contact point in the first state of operation for the sensing of an electric property of the moisture-sensitive element.

In one aspect of the humidity sensor, the first electrode can have a serpentine shape, in particular a serpentine shape comprising at least five inflections. A serpentine shape provides for a larger ratio of electrode length (I) over cross-sectional area (A) in comparison to, for example, a plate-shaped electrode, at equivalent material quantity. Therefore, for a given material resistivity, the serpentine-shaped electrode has higher total resistance and can provide more heat.

In one aspect of the humidity sensor, at least one surface along the serpentine shape of the first electrode can be in direct contact with the moisture-sensitive element. A larger contact area allows for more efficient heat conduction to the moisture-sensitive element compared to more distant heating elements known in the prior art.

In one aspect of the humidity sensor, the gap between the windings of the serpentine-shaped first electrode can be smaller, in particular at least five times smaller, than a width of the serpentine of the first electrode. By keeping the gap as small compared to the width, the loss in capacitance of the moisture-sensitive element, in comparison with for example a plane plate-shaped first electrode, can be limited, and the measure of capacitance can be improved.

In one aspect, the humidity sensor can further comprise a control means configured to control the switching of the switching means and/or the flowing of the electrical current through the first electrode. When a control means is included in the sensor, the heating function and/or the switching between states of operation can be operated autonomously. In particular, the control means controls both the switching and the flowing of current, the control means can operate fully autonomously.

In one aspect of the humidity sensor, the control means can be configured to control the switching of the switching means automatically based on a predetermined condition, in particular periodically or according to a threshold value related to the detected electric property of the moisture-sensitive element. In this configuration, the humidity sensor can have an automatic self-maintenance and/or self-calibration functionality that can be triggered for example after a predetermined amount of time has elapsed, or for example, when predetermined electric property values have been exceeded, reached, or repeatedly achieved.

In one aspect of the humidity sensor, the control means can be an integrated circuit (IC) or microchip, in particular an application-specific integrated circuit (ASIC). Thus, the control means can be integrated together with the sensing element to form a microsensor, having particularly small size.

In one aspect of the humidity sensor, the first electrode can be formed directly on the IC. In this configuration, the microsensor can be manufactured by forming the sensing element as a microelectromechanical system (MEMS) on the microchip, using for example a MEMS process using photolithography patterning. Photolithography can be particularly advantageous for the patterning of the electrode to realize the serpentine shape, without needing an extra process step.

In one aspect of the humidity sensor, the IC can comprise a passivation layer, wherein the first electrode is formed on, in particular directly on, the passivation layer. The passivation provides an insulation function for the microchip

In one aspect of the humidity sensor, the passivation layer can comprise a silicon nitride (Si₃N₄) layer and/or a silicon dioxide (SiO₂) layer. These layers are suited for the passivation of microchip active regions.

In one aspect of the humidity sensor, the first electrode can comprise at least one layer of a material selected amongst tungsten (W), chrome (Cr), titanium (Ti), titanium nitride (TiN), manganese (Mn), a nickel-chrome alloy such as stainless steel, and carbon (C). These materials have a high resistivity that is advantageous for the generation of heat when electrical current flows through the electrode.

Preferably the at least one layer can be formed directly on a passivation layer of the IC. The at least one layer can thus improve adhesion between the passivation layer and the electrode, in particular when the electrode comprises noble metals.

In one aspect of the humidity sensor the first electrode can further comprise at least one noble metal layer, in particular a gold (Au) silver (Ag), copper (Cu) or platinum (Pt) layer. Noble metals provide improved corrosion resistance and thus improved durability, and are particularly suited for capacitive sensing.

In one aspect of the humidity sensor, the switching means can be further arranged to also switch the second electrode between a first state of operation, in particular the first state of operation of the first electrode, and a second state of operation, in particular the second state of operation of the first electrode. Thus, both electrodes can be used to directly heat the moisture-sensitive element.

The above-described aspects, objects, features and advantages of the present invention will be more completely understood and appreciated by careful study of the following more detailed description of presently preferred exemplary aspects and embodiments of the invention, taken in conjunction with accompanying drawings, in which:
Figure 1A shows a cross-sectional side view of a humidity sensor according to a first embodiment of the invention.
Figure 1B shows a cross-sectional top view of an electrode for the humidity sensor of Figure 1.
Figure 2 shows a cross-sectional top view of an electrode for a humidity sensor according to a second embodiment of the invention.
Figure 3A shows a cross-sectional top view of an electrode for a humidity sensor according to a third embodiment of the invention.
Figure 3B shows a cross-sectional side view of an electrode for the humidity sensor of Figure 3A.

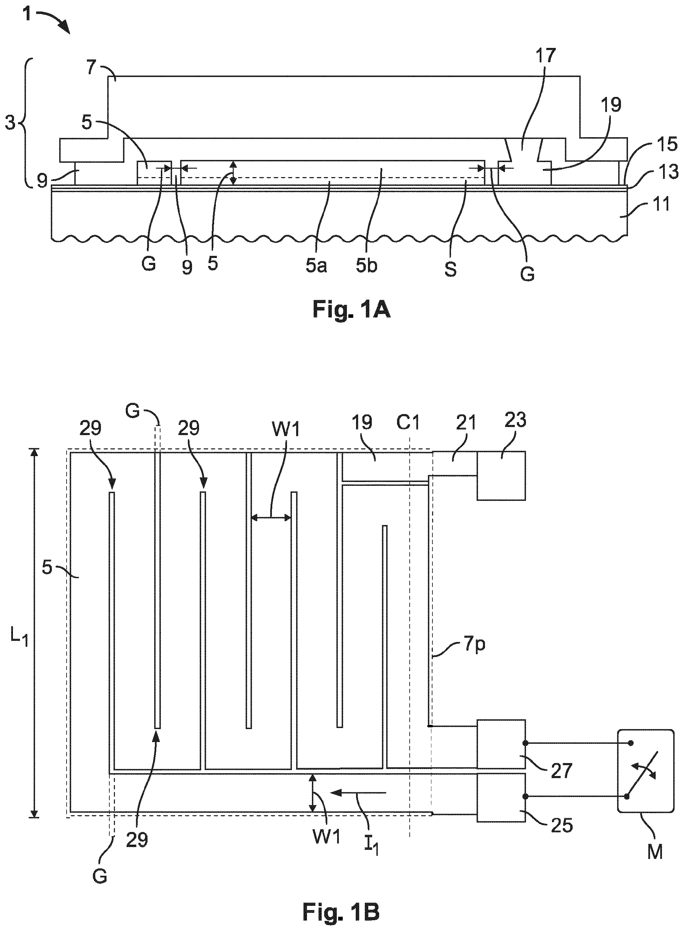

Unless explicitly described otherwise, the structural features of the objects illustrated in Figures 1A to 3B are not drawn to scale, neither individually with respect to their Cartesian dimensions, nor with respect to each other along one Cartesian direction. Identical reference signs used in different figures relate to identical elements.

A humidity sensor according to a first embodiment of the invention will now be described with reference to Figures 1A and 1B. Figure 1 shows a cross-sectional side view of the humidity sensor 1 along the line C1 in Figure 1B. The humidity sensor 1 of the first embodiment is a sandwich-type sensor. That is, the sensing element 3 of the sensor 1 comprises a first ("bottom") electrode 5, a second ("top") electrode 7, and a moisture-sensitive element 9 sandwiched by the first electrode 5 and the second electrode 7. As already mentioned in the background section, sandwich-type sensors are already disclosed in prior art document and the general arrangement and functioning of such sensors will thus not be described herein.

The humidity sensor 1 further comprises an application-specific integrated circuit (ASIC) 11 typically manufactured by complementary metal-oxide semiconductor (CMOS) technology. The ASIC 11 comprises an outermost passivation layer 13, which in one preferred embodiment can be a of silicon dioxide (SiO₂) layer or a silicon nitride (Si₃N₄) or a bi-layer of silicon dioxide (SiO₂) over silicon nitride (Si₃N₄).

Here, the first electrode 5 is provided on the passivation layer 13, the moisture-sensitive element 9 is then provided on the first electrode 5, and the second electrode 7 is provided over the moisture-sensitive element 9.

Here, the second electrode 7 is deposited such that it fully overlays both the first electrode 5 and the moisture-sensitive element 7, without contacting the first electrode 5. In this embodiment, a via 17 is additionally formed in the moisture-sensitive element 9, connecting the second electrode 7 to an internal contact pad 19.

The second electrode 7 is thicker than the first electrode 5, and porous, such that gas molecules of the ambient environment such as water can diffuse into the moisture-sensitive element 9. For example, the second electrode 7 can comprise an organic binder filled with platinum or carbon particles.

The moisture-sensitive layer 9 comprises a dielectric material whose capacitance varies with the water content in the layer 9. In this embodiment, the moisture sensitive element 9 is made of a polymeric material, specifically a polyimide. As will become clearer in view of Figure 1B, the moisture-sensitive layer 9 fills gaps G in the first electrode 5 entirely such that it the dielectric material is directly in contact with the surface 15 both around the first electrode 5, and inside the gaps G.

The electrodes are 5 and 7 are connected to ASIC input pads (not represented) of the ASIC 11 by conventionally known techniques such as wire-bonding or metal traces. The ASIC 11 is configured to sense the capacitance and to output a corresponding signal.

The packaging and over-moulding of the sensing element 3 and the ASIC 11 can vary depending on application-specific requirements or manufacturing constraints, is known in the art, and will not be further described.

In alternative embodiments, the moisture-sensitive element 9 can be an inorganic layer. In further alternative embodiments, the dielectric material of the moisture-sensitive element can be selected such that a different electric properties, for example the resistance, impedance or reactance, varies sensitively with the present water content.

According to a variant of the first embodiment of the invention, the first electrode 5 can be a bi-layer electrode having a first layer 5a formed on the surface 15 of the passivation layer 13, and a second layer 5b formed on the first layer 5a of the first electrode 5. For illustration purposes, the separation line S illustrates the demarcation between the first layer 5a and the second layer 5b.

The first layer 5a is a metallic layer of a material selected amongst tungsten (W), manganese (Mn), titanium (Ti), chrome (Cr), titanium nitride (TiN), and alloys thereof. These materials have good adhesion to the underlying passivation layer 13. In addition, those layers provide a higher resistivity, allowing a higher heat generation when an electric current is flowed through the first electrode 5. In variants, the second layer 5a can also be an carbon-based layer or a stainless steel layer.

The second layer 5b is a metallic layer of a noble metal selected e.g. amongst gold (Au), platinum (Pt), copper (Cu), and silver (Ag). The second layer 5b is configured to prevent or reduce corrosion and to provide a high conductivity for improved capacitance sensing performance.

The first layer 5a and second layer 5b of the first electrode 5 can each have thicknesses comprised between 1nm and 1000nm, preferably each between 10nm and 200nm. Preferably, the first layer 5a has a thickness between two and five times greater than the thickness of the second layer 5b.

The sensing element 3 can be formed on the surface 15 of the passivation layer 13 of the ASIC 11 using a microelectromechanical (MEMS) manufacturing process, e.g. using photolithography for patterning purposes.

Figure 1B shows a cross-sectional top view of the first electrode 5 of the humidity sensor 1.In particular, Figure 1B illustrates the first electrode 5, the internal contact pad 19 connected to the second electrode 7, as well as, for illustration purposes, the peripheral outline 7p of the active region of the porous second electrode 7 deposited over the first electrode 5, projected onto the same plane. In this embodiment, the second electrode 7 has a square shape, and the projection 7p is correspondingly square-shaped as well. The line C1 represents the cut line for the cross-sectional view of Figure 1A.

The internal contact pad 19 is connected by a metal trace 21 to a ASIC input pad 23 of the ASIC. The first electrode 5 has a serpentine shape and comprises, at respectively opposed extremities of the serpentine shape, a first contact pad 25, representing a first contact point, and a second contact pad 27, representing a second contact point. The contact points, here contact pads 25,27, are configured for the application of an electrical potential therebetween. In this embodiment, the first contact pad 25 and the second contact pad 27 are directly connected to ASIC input pads (not represented) by conventional techniques such as wire-bonding or metal tracing.

The first electrode 5 has a serpentine shape with square windings, or turning portions. In other words, the first electrode is a continuous conductive trace that goes back and forth, in the shape of a square saw-tooth signal shape. For example, in the present embodiment, the electrode 5 is patterned to a serpentine shape having seven winding inflections 29, or inflection points, around which the continuous trace of the serpentine shape inflects. The first electrode 5 is dimensioned and shaped to cover substantially the entirety of the area defined by the projection 7p, to maximize the capacitance of the sandwiched moisture-sensitive element 9 to be measured. For this purpose, the gap G between the windings, that is, between linear sections, of the serpentine shape is kept small, specifically at least five times smaller, than the cross-sectional width W1 of first electrode 5. As already mentioned, in this embodiment, the gap G is filled with the dielectric material of the moisture-sensitive element 9. However, according to variants, the gap G can also be filled with a different, insulating, non-conductive material.

As the moisture-sensitive element 9 is deposited over the serpentine-shaped first electrode 5, the top and side surfaces of the first electrode 5 are covered by, that is, in contact with, the moisture-sensitive element 9, and the bottom surface is in contact with the surface 15 of the passivation layer 13. As already mentioned, the moisture-sensitive material 9 also fills the gap G between windings of the first electrode 5.

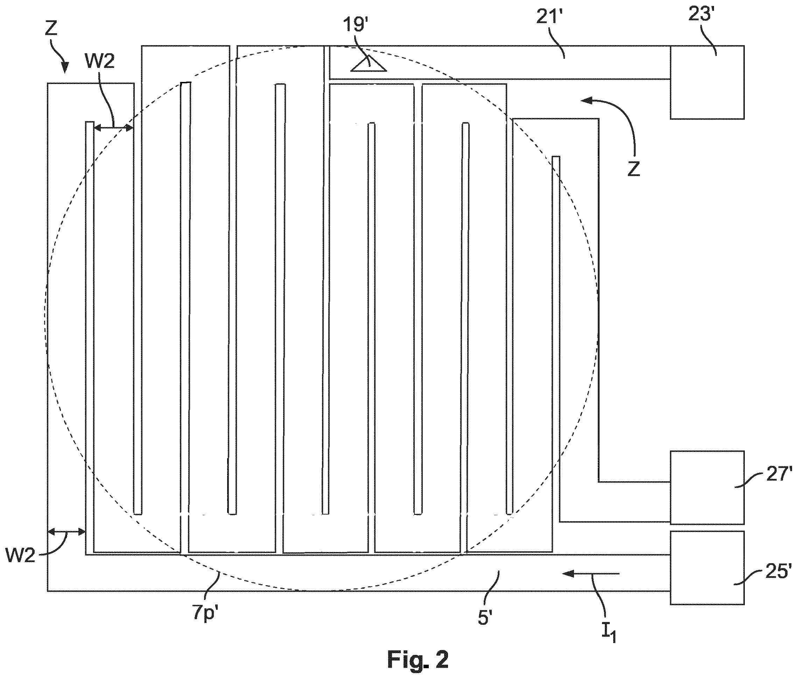

The projection 7p of the active region of the second electrode 7, representing substantially the area covered by the first electrode 5, has a square side length L1 having a value comprised between 10µm and 5000µm, preferably between 200µm and 500µm. In alternative embodiments, the projection of the second electrode7 can be rectangular-shaped rather than square-shaped, or circular (see Figure 2). The width W1 has a value comprised between 3µm and 300µm, preferably between 10µm and 100µm.

The gap G has a value between 0.6µm and 60µm. As dielectric material of the moisture-sensitive element 9 fills the gaps G, the nominal capacitance of the sensing element 3 is reduced and the sensitivity of the sensor 1 reduced. Thus, keeping the gap G small provides the advantage of also keeping the loss in capacitance of the moisture-sensitive element 9 small, in comparison to a plate-shaped first electrode.

In a practical example, the gap G is 6µm wide and the first electrode has a width W1 of 30µm. In that case, a loss in capacitance of less than 2% can be observed compared to a plane plate-shaped electrode.

In this embodiment, the ASIC 11 is connected to contact pads 25, 27 of the first electrode 5 and to the second electrode 7 through the contact pad 23.

According to the invention, the ASIC 11 includes a switching means M, illustrated schematically on Figure 1B. According to the present embodiment, the switching means M is not a hardware component but a process step or a programmed feature of the ASIC 11.

However, in variants, the switching means M can be a hardware component included with the packaging of the humidity sensor 1, or a hardware component physically separate from the packaging of the humidity sensor 1. In a further variant, the switching means M can be a process step or a programmed feature of a physically separate processor. In these cases, the contact pads 25, 27 are connected to contact points of the external switching means by wire-bonding or metal traces.

The switching means M is arranged to switch the first electrode between a first state of operation and a second state of operation. In the first state of operation according to the invention, the electrical contact points of the contact pads 25, 27 of the first electrode 5 are short cut by the switching means M and thus at the same electrical potential. In this position, the capacitance of the moisture-sensitive element 9 can be sensed by the application of a voltage between the first electrode 5 and the second electrode 7. For example, the capacitance can be sensed by sigma-delta modulation. The capacitance measure can be used to derive a relative humidity (RH) value.

In the second state of operation according to the invention, the contact pads 25, 27 of the first electrode 5 are not short-cut, and instead connected to different electric potentials such that an electric current I1 flows through the serpentine-shaped first electrode 5. Thus, a direct electrical current can flow from one electrical contact point, for example contact pad 25, to the other electrical contact point for example contact pad 27 in the second state of operation.

The material and structural features of the first electrode 5 described here-above allow for an efficient heating of the moisture-sensitive element 9 through the current I1 flowing through the first electrode 5. For example, in the second state of operation, the electrical current can have a current intensity comprised between 10mA and 100 mA. In some embodiments, to avoid overheating of the electrode, the electrical current in the second state of operation can be controlled to flow in pulses, for example in pulses of a duration comprised between 0.1s and 1s.

As the temperature of the moisture-sensitive element 9 rises, for example by at least 50K, preferably by more than 70K, trapped water and contaminant molecules are liberated, and the creep is reduced or even annulled.

According to the invention, the first electrode 5 is used to heat the moisture-sensitive element 9. Thus, in comparison to external or further remotely arranged heating devices, the heat generated does not need to traverse additional layers of the sensor 1, such as silicon dioxide (SiO₂) passivation layer having low thermal conductivity, of around 1.5W/(m.K).

Consequently, the current density necessary to heat the moisture-sensitive element 9 to a required temperature can be kept comparatively low. By keeping the current density comparatively low, in particular below 4kA/mm², the risk of damage to components of the sensor 1 and of electromigration is also reduced.

The heating performance of the electrode 5 is determined by the total electrode resistance R, which in turn is determined by electrical resistivity of the electrode material, the width W1 of the electrode 5, the deposited thickness of the electrode 5, and the total length of the electrode along the serpentine shape. The above-described dimensions and structural arrangements of the first electrode 5 provide a balance of material costs, heating performance and sensing element 3 sensitivity in the second state of operation.

The ASIC 11 preferably includes a control means configured to control the switching of the switching means M, the sensing of the capacitance in the first state of operation in the first state of operation, and the flowing of current I1 through the first electrode 5 in the second state of operation.

In a variant embodiment, the control means is configured to control the switching of the switching means M periodically, that is, after a predetermined amount of time has elapsed. For example, a predetermined amount of time can be set to ten hours for the first state of operation and for one hour in the second state of operation. Thus, after every ten hours of humidity sensing, the moisture-sensitive element 9 is heated for one hour to remove counteract creep and remove contaminants. Alternatively or in addition, the controls means could be configured to control the switching based on capacitance measurement values, for example, when the measured capacitance values fall below or exceed predetermined range of expected capacitance values.

In another variant, the control means can be configured to control the switching of the switching means only upon external command or input. For example, a user activates the switching of the switching means when a maintenance is desired or scheduled.

Figure 2 shows a first electrode 5' of a humidity sensor according to a second embodiment of the invention. The humidity sensor of the second embodiment of the invention differs from the first embodiment of the invention only with respect to the structural arrangement of the electrodes. Figure 2 shows a first electrode 5' and a projection 7p' of a second electrode 7', in a view corresponding to the view of Figure 1B. The first electrode 6 comprises contact pads 25', 27'. An internal contact pad 19', connected by via to the second electrode 7' (not shown), is connected by a metal trace 21' to a ASIC input pad 23'.

In the second embodiment, the second electrode 7' has a circular shape, and the projection 7p' of the second electrode 7' on the plane is circular. The serpentine shape of the first electrode 5' is arranged to be adapted to the circular outline 7p'. In particular, corner zones Z are omitted from the electrode design, in comparison to a rectangular design such as the one of Figure 2. In addition, the width W2 of the serpentine electrode 5' are smaller, for example 10% to 40% smaller, than the width W1 of the first electrode 5 of the first embodiment. In this embodiment having first and second electrodes with overall circular area, the overall compactness of the humidity sensor including the packaging can be advantageously increased.In other embodiments of the invention, the first electrode can be patterned in a shape having rounded corners or soft corners, in particular in a way to avoid sharp or U-shaped corners. For example the first electrode can have a spiral shape, or a labyrinthine shape, or an annular shape, or even an octagonal shape. By avoiding sharp or U -shaped corners, material degrading electrical phenomena such as electron migration can be reduced or avoided, and the durability of the electrode prolonged.

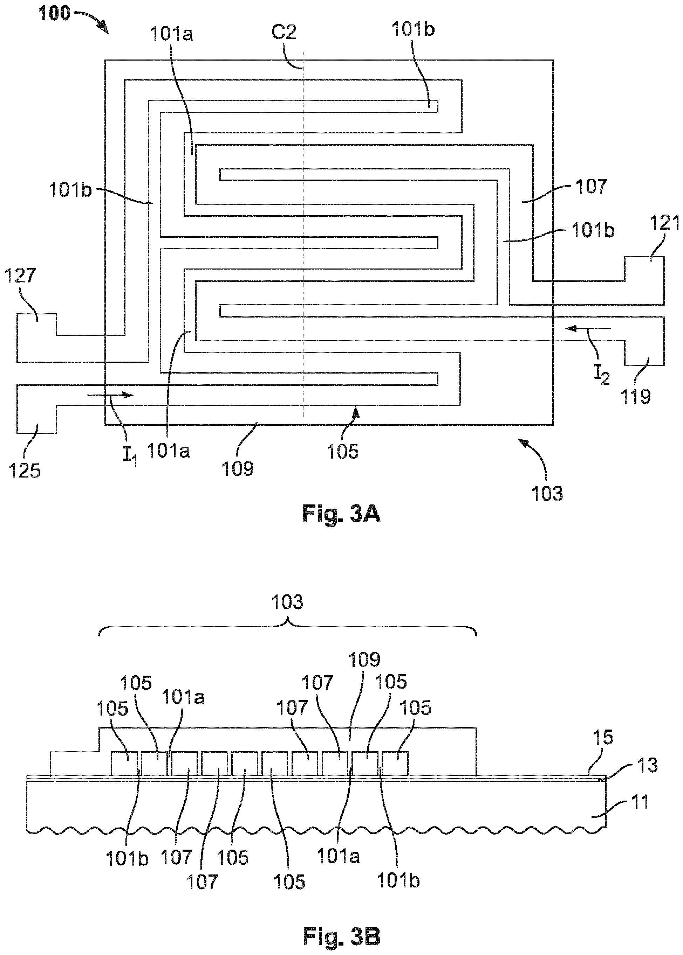

Figure 3A shows the electrodes of a humidity sensor according to a third embodiment of the invention. The humidity sensor 100 of the third embodiment of the invention is not a sandwich-type sensor but instead uses interdigitated electrodes in the sensing element, as known from already mentioned prior art document WO 2001/104776 A1.

The humidity sensor 100 of Figure 3A comprises two interdigitated electrodes 105, 107 covered by a moisture-sensitive element 109, for example of the same dielectric material as the moisture-sensitive element 9. The first electrode 105 comprises at its opposed electrode extremities respective the contact pads 125, 127, and the second electrode 103 also at its opposed electrode extremities respective the two contact pads 119, 121. In this embodiment, the contact pad pairs 125, 127 and 119, 121 are located on opposing sides of the interdigitated electrode, but could also be provided on the same side. The interdigitated electrodes 105, 107 are separated by a gap 101a. The two conductive traces of the electrode 105 extending from respective contact pads 125, 127 are separated by the gap 101b. Correspondingly, the two conductive traces of the electrode 107 extending from respective contact pads 119, 121 are also separated by the gap 101b. The contact pads 119, 121, 125, 127 are connected to ASIC input pads (not shown) of the ASIC 11, which is comprises a switching means M and control means, as already described with respect to the first embodiment.

Figure 3B shows a cross-sectional side view of the humidity sensor 100 along the line C2 of Figure 2A. Figure 3B shows like in the first and second embodiment, the electrodes 105, 107 and the moisture-sensitive element 109 are deposited on an ASIC 11. The ASIC 11 comprises the passivation layer 13 already described, and the electrodes 105, 107 are deposited on the surface 15 of the passivation layer 13. The moisture-sensitive element 109 is deposited over the electrodes 105, 107 such that it entirely fills the gap 101a and the gaps 101b. The electrodes 105, 107 and the moisture-sensitive 109 form a sensing element 103 for the sensing of a capacitance.

In this embodiment, the moisture-sensitive element 109 is directly exposed to the environment to be sensed, rather than being separated by a porous electrode 7. Both electrodes 105, 107 are metallic and non-porous. According to the invention, one or both can be configured to operate in a second state of operation in which the moisture-sensitive element 9 is heated by an electric current flowing through one or each one the electrodes 105, 107.

Thus, in this embodiment, both the first 101 and the second electrode 103 can be operated in the second state of operation to heat the moisture-sensitive element 109. As direct electrical current can flow through both electrodes, simultaneously or alternatingly, the heated surface of the moisture-sensitive element 109 is increased. For example, the moisture-sensitive element 109 is heated by the current I1 flowing through the electrode 105 and the by the current I2 flowing through the electrode 107. Thus, the heating efficiency is improved, leading to improved decontamination and decondensation performance. As the second electrode 103

### Reference numerals

1 humidity sensor
3 sensing element
5, 5' first electrode
7, 7' second electrode
7p, 7p' projection of the second electrode
9 moisture-sensitive element
11 ASIC
13 passivation layer
15 surface of the passivation layer
17 via
19, 19' internal contact pad
21, 21' metal trace for the second electrode
23, 23' ASIC input pad
25, 25' first electrical contact pad
27, 27' second electrical contact pad
29 winding inflection points
100 humidity sensor of an IdT type
101a gaps between electrodes
101b gaps between windings of the electrodes
103 sensing element
105 first electrode
107 second electrode
109 moisture sensitive element
119, 121 electrical contact points of the second electrode
125, 127 electrical contact points of the first electrode
C1 cross-sectional cut line of Figure 1A
C2 cross-sectional cut line of Figure 3B
G serpentine winding gap
I1 direct electrical current direction through the first electrode
I2 direct electrical current direction through the second electrode
L1 second electrode projection length
M switching means
W1 serpentine width in the first embodiment
W2 serpentine width in the second embodiment
Z corner zones

## Claims

1. Humidity sensor comprising a sensing element (3, 103) and a switching means (M),
the sensing element (3, 103) comprising a first electrode (5, 105), a second electrode (7, 107), and a moisture-sensitive element (9, 109),
wherein the switching means (M) is arranged to switch the first electrode (5, 105) between a first state of operation and a second state of operation, wherein
in the first state of operation, the first electrode (5, 105) is configured to sense an electric property, in particular a capacitance, of the moisture-sensitive element (9, 109), and
in the second state of operation, the first electrode (5, 105) is configured to heat the moisture-sensitive element (9, 109) by the flowing of an electrical current, in particular a direct current (DC), through the first electrode (5, 106).

2. Humidity sensor according to claim 1, wherein at least a portion of the moisture-sensitive element (9) is sandwiched between the first electrode (5) and the second electrode (7).

3. Humidity sensor according to claim 1 or 2, wherein the first electrode (5, 105) comprises two electrical contact points (25, 27; 125, 127; 119, 121), the two electrical contact points (25, 27; 125, 127; 119, 121) being at same electric potential, for example short cut by the switching means (M), in the first state of operation and a different electric potential in the second state of operation.

4. Humidity sensor according to any one of claims 1 to 3, wherein the first electrode (5) has a serpentine shape, in particular a serpentine shape comprising at least five inflections (29).

5. Humidity sensor according to claim 4, wherein at least one surface along the serpentine shape of the first electrode (5) is in direct contact with the moisture-sensitive element (9).

6. Humidity sensor according to claim 4 or 5, wherein the gap (G) between the windings of the serpentine-shaped first electrode (5) is smaller, in particular at least five times smaller, than a width (W1) of the first electrode (5).

7. Humidity sensor according to any one of claims 1 to 6, further comprising a control means (11) configured to control the switching of the switching means (M) and/or the flowing of the electrical current through the first electrode (5, 105).

8. Humidity sensor according to claim 7, the control means (11) is configured to control the switching of the switching means (M) automatically based on a predetermined condition, in particular periodically or according to a threshold condition related to the detected electric property of the moisture-sensitive element (9, 109).

9. Humidity sensor according to claim 7 or 8, wherein the control means (11) is an integrated circuit (IC) or microchip, in particular an application-specific integrated circuit (ASIC).

10. Humidity sensor according to claim 9, wherein the first electrode (5, 105) is formed directly on the IC (11).

11. Humidity sensor according to claim 10, wherein the IC (11) comprises a passivation layer (13), and wherein the first electrode (5, 105) is formed on, in particular directly on, the passivation layer (13).

12. Humidity sensor according to claim 11, wherein the passivation layer (13) comprises a silicon nitride (Si3N4) layer and/or a silicon dioxide (SiO2) layer.

13. Humidity sensor according to any one of claims 1 to 12, wherein the first electrode (5, 105) comprises at least one layer of a material selected amongst tungsten (W), chrome (Cr), titanium (Ti), titanium nitride (TiN), manganese (Mn), a nickel-chrome alloy such as stainless steel, and carbon (C).

14. Humidity sensor according to claim 13, wherein the first electrode (5, 105) further comprises at least one noble metal layer, in particular a gold (Au), silver (Ag), copper (Cu) or platinum (Pt) layer, preferably formed directly on the at least one layer.

15. Humidity sensor according to any one of claims 1 to 14, wherein the switching means (M) is further arranged to also switch the second electrode (107) between a first state of operation, in particular the first state of operation of the first electrode (5, 105), and a second state of operation, in particular the second state of operation of the first electrode (5, 105).
